# EUROPÄISCHE PATENTANMELDUNG

(11) **EP 1 931 011 A2**
(43) Veröffentlichungstag der Anmeldung: **11.06.2008**
(21) Anmeldenummer: 07023330.9
(22) Anmeldetag: 03.12.2007
(51) Int. Cl.: H02J 9/06

(54) **Vorrichtung zum Betrieb mindestens eines mechanisch und/oder elektrisch betätigbaren Bauelements**

(30) Priorität: 06.12.2006 DE 102006057473
(71) Anmelder: BÜ-SCH ARMATUREN GMBH, 90478 Nürnberg (DE)
(72) Erfinder: Schmidt, Horst, 90475 Nürnberg (DE); Spotka, Rudolf, 90427 Nürnberg (DE)
(74) Vertreter: Förster, Susanne

(57) **Zusammenfassung**

Die vorliegende Erfindung betrifft eine Vorrichtung zum Betrieb mindestens eines mechanisch und/oder elektrisch betätigbaren Bauelements oder Baugruppe mit mmdestens einer netzunabhängigen Energiequelle, mindestens einem Energiespeicher zum Speichern der Energie der Energiequelle sowie einer dem Bauelement oder der Baugruppe vorgeschalteten Steuereinheit (7), wobei dem Energiespeicher eine Vorrichtung zur Umwandlung von Gleichspannung in Wechselspannung nachgeschaltet ist, die der Steuereinheit (7) unmittelbar vorgeschaltet ist, um im Bedarfsfall die für die Betätigung des Bauelements oder der Baugruppe nötige Energiemenge zur Verfügung zu stellen.

## Beschreibung

Die Erfindung betrifft eine Vorrichtung zum Betrieb mindestens eines mechanisch und/oder elektrisch betätigbaren Bauelements oder Baugruppe mit mindestens einer Energiequelle, mindestens einem Energiespeicher zum Speichern der Energie der Energiequelle sowie einer dem Bauelement oder der Baugruppe vorgeschalteten Steuereinheit

Für die Steuerung und den Antrieb von Armaturen, wie beispielsweise einer Schieberarmatur zum Schließen von Kanälen oder sonstigen Absperrarmaturen, werden diese vom öffentlichen Netz mit Strom versorgt. Wird der Einsatz der Armaturen jedoch an Orten benötigt, wo keine Netzversorgung mit elektrischem Strom vorhanden ist, ist eine aufwendige und kostenintensive Stromverkabelung notwendig,

Es sind aber auch Antriebssysteme bekannt, die autark arbeiten und z.B. mittels in elektrischen Strom umgewandelte Sonnen- oder Windenergie arbeiten.

In DE 197 33 926 A1 ist eine Vorrichtung mit solarer, fotovoltaischer Energieversorgung zur Förderung von Wasser offenbart. Die von dem Solargenerator gelieferte Energie wird direkt einem Steuergerät zugeleitet, das die Betriebsführung eines nachgeschalteten Motors bewerkstelligt. Dabei wird dem Motor die Leistung zur Verfügung gestellt, die der momentanen Sonneneinstrahlung im Wesentlichen entspricht.

Aus WO 2004/063607 A2 ist ein Antriebssystem für ein Bohrlochventil bekannt, um die Menge des natürlichen Gases zu regeln, Die Steuer- sowie Antriebseinheit des Ventils wird über eine 12 V-Spannungsbatterie versorgt. Die Batterie speichert dabei die von einer Solarzelle generierte elektrische Energie. Über einen Gasdurchflusssensor wird die Durchflussrate des Gases ständig überwacht. Vorzugsweise kann per Ferndatenübertragung eine Anpassung vorgenommen werden, sofern gewisse Parameter einsatzbedingt geändert werden sollen.

Die Aufgabe der vorliegenden Erfindung besteht darin, eine gespeicherte Energie auch für den Antrieb von herkömmlichen, mechanischen oder elektrischen Funktionseinheiten im Bedarfsfall zu verwenden.

Diese Aufgabe wird durch die gesamte Lehre des Anspruchs 1 gelöst. Vorteilhafte Weiterbildungen der Erfindung ergeben sich aus den Untersprüchen 2 -11.

Die erfindungs gemäße Vorrichtung zum Antrieb mindestens eines mechanisch und/oder elektrisch betätigbaren Bauelements oder Baugruppe umfasst mindestens eine netzunabhängige Energiequelle, mindestens einen Energiespeicher zum Speichern der Energie der Energiequelle sowie eine dem Bauelement oder der Baugruppe vorgeschaltete Steuereinheit, wobei dem Energiespeicher eine Vorrichtung zur Umwandlung von Gleichspannung in Wechselspannung nachgeschaltet ist, die der Steuereinheit unmittelbar vorgeschaltet ist, um im Bedarfsfall die für die Betätigung des Bauelements oder der Baugruppe nötige Energiemenge zur Verfügung zu stellen. Die Vorrichtung zur Umwandlung von Gleichstrom in Wechselstrom kann einen Spannungswandler beinhalten, der die Spannung in eine höhere oder niedrigere Spannung umwandelt. Es handelt sich demnach um ein autarkes Betriebssystem, das von dem öffentlichen Netz unabhängig ist. Eine teuere Stromverkabelung zum Anschluss an das öffentliche Versorgungsnetz ist nicht erforderlich. Die Vorrichtung hat außerdem den Vorteil, dass einerseits ausreichend Energie zur Verfügung steht, um das Bauelement oder die Baugruppe zu betätigen, und andererseits herkömmliche mechanische oder elektrische Bauelemente oder Baugruppen verwendet werden können, die je nach Land oder Gerät eine unterschiedliche Versorgungsspannung benötigen, z.B. ist für Geräte in Deutschland im Allgemeinen eine Versorgungsspannung von 230 V/50 Hz erforderlich. In der verbleibenden, überwiegenden Zeit wird nahezu die vollständige von der Energiequelle stammende Energie dem Energiespeicher zugeführt. Als mechanisch und/oder elektrisch betätigbares Bauelement oder Baugruppe ist eine Vielzahl von Ausgestaltungsvarianten oder Anwendungen möglich. Neben der Steuerung von Armaturen können z.B. auch Pumpen, Pressen, Motoren oder andere Maschinen bedient werden. Auch pneumatische oder hydraulische Anwendungen sind möglich.

Mit besonderem Vorteil kann als Energiequelle eine regenerative (erneuerbare) Energiequelle vorgesehen sein, um von dem öffentlichen Stromnetz unabhängig sein. Es können also demnach Energiequellen in Form von Windenergie und/oder Wasserkraft und/oder Gezeitenströmungen und/oder Sonnenlicht und/oder Wärme und/oder Erdwärme genutzt werden. Für die Umwandlung der jeweiligen Energie in elektrische Energie sind die entsprechenden Umwandlungseinheiten, wie z.B. ein Windrad oder Windkrafrwerk und/oder ein Wasserkraftwerk und/oder eine Fotovoltaikanlage vorgesehen. Besonders geeignet ist eine Fotovoltaikanlage oder ein Fotovoltaik-Modul, dessen Aktivität von der Sonneneinstrahlung abhängt, Wird aufgrund einer fehlenden Sonneneinstrahlung (z.B. in der Nacht) keine Energie erzeugt, so kann die fehlende Ladespannung durch eine zweite Spannungsquelle, z.B, durch ein Windrad ersetzt werden. Aber auch wenn zeitweilig keine Energie dem Energiespeicher zugeführt wird, ist dies unschädlich, da der Energiespeicher bereits gespeicherte Energie zur Verfügung hat.

An der Vorrichtung zur Umwandlung von Gleichspannung in Wechselspannung kann ein Zeitgeber (auch Timer genannt) vorgesehen sein. Mittels des Timers wird die Vorrichtung zur Umwandlung von Gleichspannung in Wechselspannung bzw. der Wechselrichter nur dann geschaltet, wenn tatsächlich für den Betrieb eines Bauelements oder einer Baugruppe eine Versorgung mit Wechselspannung benötigt wird. Der Zeitgeber ist sozusagen der Schlüssel für die Steuerung. Üblicherweise benötigt das zu betätigende Bauelement bereits in der Initialisierungsphase den Wechselstrom mit der erforderlichen Spannung.

Bei der Vorrichtung zur Umwandlung von Gleichspannung in Wechselspannung kann es sich um einen Wechselrichter handeln. Wird keine Energie zur Betätigung des Bauelements oder der Baugruppe benötigt, so befindet sich der Wechselrichter im Wesentlichen im Ruhezustand und hat keinen oder keinen wesentlichen Energieverbrauch. Die während des Ruhezustands über die Energiequelle einfließende Energie bzw. der erzeugte Strom wird nahezu vollständig dem Energiespeicher zugeführt.

Mittels des Wechselrichters kann eine am Einsatzort verwendete Versorgungsspannung erzeugbar sein, z.B. kann eine Wechselspannung von 230 V/50 Hz zur Verfügung gestellt werden. Damit steht ausreichend Energie bzw. eine ausreichend hohe Spannung zur Verfügung, um herkömmliche mechanische und elektrische Standardbauteile mit der erforderlichen Versorgungsspannung anzutreiben. Die Energie bzw. der Strom reicht zumindest dazu aus, um eine Weg- oder Drehmomentabschaltung durchzuführen. Es ist aber auch möglich, dass der Wechselrichter nicht aktiviert wird, so dass direkt der von dem Energiespeicher kommende Strom zum Antrieb eines Bauelements verwendet wird. Dabei kann es sich um eine höhere oder niedrigere Gleichspannung, z.B. um eine Niedrigvoltspannung von 24 V handeln, die für entsprechende Standardbauteile ausreicht.

Zusätzlich kann auch ein Spannungswandler vorgesehen sein, der die ankommende Gleichspannung in eine höhere oder niedrigere Gleichspannung umwandelt,

Als Energiespeicher kann vorteilhafterweise eine Puffer-Batterie vorgesehen sein, bei welcher es sich um eine sogenannte Gel-Batterie handeln kann. Die Speichergröße der Batterie kann zweckmäßigerweise auf den Verbraucher, d.h. auf das zu betätigbare Bauelement oder die Baugruppe abgestimmt sein, Die Puffer-Batterie kann direkt zum Antrieb eines entsprechenden Verbrauchers ohne Verwendung des Wechselrichters eingesetzt werden.

Als mechanisch und/oder elektrisch betätigbares Bauelement oder Baugruppe kann eine Armatur für die Gas-, Öl- oder Wasserver- und/oder -entsorgung vorgesehen sein. Wie oben bereits erwähnt, können aber auch andere Anwendungen, wie z.B. pumpen, Pressen, Motoren oder andere Maschinen bedient werden. Besonders dann, wenn eine vom öffentlichen Stromnetz unabhängige Armaturensteuerung oder Steuerung andersartiger Bauelemente notwendig ist, ist die autarke Vorrichtung vorteilhaft. Mögliche Einsatzbereiche der erfindungsgemäßen Vorrichtung können folgende sein: in RegenRückhaltebecken, im Hochwasserschutz, in Stauwehren, in Pumpstationen, in Femversorgungsleitungen für Gase, Öle oder Wasser, Die dort vorgesehenen Armaturen oder andersartigen Bauelemente müssen nicht ständig angetrieben werden, sondern nur im Not- oder Bedarfsfall, für den dann auch die Leistung des Energiespeichers ausreicht.

Vorteilhafterweise kann ein Sende-/Empfangsgerät vorgesehen sein, um Informationen an ein externes Kommunikationsgerät zu senden bzw, von diesem zu empfangen. Es ist damit möglich, dass der Status der Anlage jederzeit von überall abgefragt werden kann. Ferner kann die Anlage von dem Kommunikationsgerät aus ein- und ausgeschaltet werden, Die Anlage kann z.B. über SMS- oder GSM- bzw. GPRS-Netze von jedem Ort aus aktiviert, gesteuert und überwacht werden.

Es kann mindestens ein Sensor vorgesehen sein, der den Eintritt eines Auslösekriteriums überwacht und darauf entsprechend reagiert. Insbesondere können mehrere Sensoren vorgesehen sein, die dasselbe oder auch unterschiedliche Auslösekriterien überwachen. Bei Eintreten eines entsprechenden Auslösekriteriums gibt der Sensor seine Information entweder an eine Sensorik-Einheit oder Sensor-Auswertung weiter, die die Steuereinheit aktiviert. Der Sensor kann das Auslösekriterium aber auch mittelbar oder unmittelbar an das Sende-/Empfangsgerät weitergeben, welches sodann eine Meldung an ein externes Empfangsgerät oder Sende-/Empfangsgerät weiterleitet. Die Reaktion des Sensors oder jeder Alarm oder jede Veränderung im System kann zu einer Meldung an eine zuständige Leitwarte, an Notrufzentralen, an einen autorisierten Reparaturservice oder an eine andere festgelegte Adresse führen. Es ist auch möglich, dass eine Fax-Meldung zur externen Dokumentation gesendet wird.

Dem Sende-/Empfangsgerät und/oder dem Sensor kann eine Sensor-Auswertung nachgeschaltet sein, die die Steuereinheit aktiviert. Das System überwacht sich damit selbst Bei Eintreten einer Störung, die mittels des Sensors festgestellt wird, startet ein vorher festgelegter Funktionsablauf, indem z.B. eine Schieberarmatur geöffnet oder geschlossen oder eine Pumpe an- oder ausgeschaltet wird. Mit dieser einen Funktion hat die Anlage sodann ihre Aufgabe erfüllt. Es muss dabei kein Alarm an eine Leitwarte oder Notrufzentrale etc. erfolgen. Die Variante ohne externes Kommunikationsgerät ist besonders für Gebiete vorteilhaft, in denen kein Senden oder kein Empfang von Signalen, z.B. über ein Handy-GSM-Netz möglich ist

Der Sensor-Auswertung kann eine Positionsauswertung nachgeschaltet sein, welche wiederum das Signal an die Steuereinheit 7 sendet.

Die Erfindung ist anhand von vorteilhaften Ausführungsbeispielen gemäß der Zeichnungsfiguren näher erläutert. Diese zeigen:
- Fig. 1: ein Blockschaltbild zur erfindungsgemäßen Vorrichtung sowie
- Fig. 2: eine Prinzipdarstellung eines Regenrückhaltebeckens unter Einsatz der erfindungsgemäßen Vorrichtung.

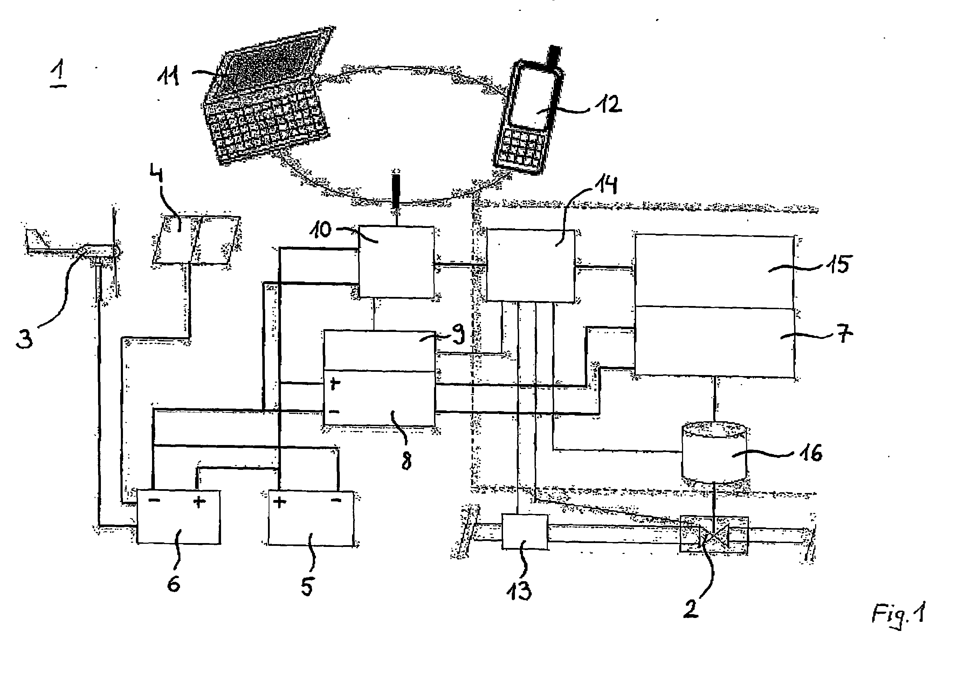

Die in Fig. 1 als Blockschaltbild dargestellt Vorrichtung wird in ihrer Gesamtheit mit Bezugsziffer 1 bezeichnet Die Vorrichtung 1 dient dem Betrieb einer Armatur 2, z.B. einer Schieberarmatur zum Öffnen und/oder Schließen eines Beckens oder eines Kanals. Der Motor zum Antrieb der Armatur 2 ist mit Bezugsziffer 16 bezeichnet. Die Armatur 2 ist nur in dem vorliegenden Ausführungsbeispiel dargestellt, es können aber auch andere mechanisch und/oder elektrisch betätigbare Bauelemente oder Baugruppen vorgesehen sein. Die Vorrichtung 1 umfasst außerdem regenerative Energiequellen in Form eines Windgenerators 3 sowie einer Fotovoltaikanlage 4. Zum Speichern der Energie der Energiequelle ist ein Energiespeicher in Form einer Puffer-Batterie 5 vorgesehen. Die Vorrichtung 1 ist damit ein autarkes System, das vom öffentlichen Stromnetz unabhängig ist. Um die Batterie auf die Spannung des eingesetzten Energiepuffers, in diesem Ausführungsbeispiel auf 24 V zu laden sowie den anderen nachgeschalteten Geräten eine entsprechende 24 V-Gleichspannung zur Verfügung zu stellen, ist eine Laderegelung 6 vorgesehen, die die vom Windgenerator 3 und der Fotovoltaikanlage 4 ankommende Spannung auf 24 V regelt. Der Armatur 2 ist außerdem eine Steuereinheit 7 vorgeschaltet Der Puffer-Batterie 5 ist eine Vorrichtung zur Umwandlung von Gleichspannung in Wechselspannung, nämlich ein Wechselrichter 8 nachgeschaltet, der der Steuereinheit 7 unmittelbar vorgeschaltet ist, um im Bedarfsfall die für die Betätigung der Armatur 2 nötige Energiemenge zur Verfügung zu stellen. Die Vorrichtung hat damit den Vorteil, dass sie vollkommen autark arbeitet, indem in dem Energiespeicher bzw. der Puffer-Batterie 5 die Energie der regenerativen Energiequellen gespeichert wird und mittels des Wechselrichters 8 die Wechselspannung von 230 V zur Betätigung der Armatur bereitgestellt wird. Ist statt der Armatur 2 ein zu betätigendes Bauelement oder eine Baugruppe vorgesehen, die Gleichstrom benötigt, so ist die Vorrichtung auch einsetzbar, jedoch ohne Aktivierung des Wechselrichters 8.

An dem Wechselrichter 8 ist ein Zeitgeber 9 (auch Timer genannt) vorgesehen, der das An- und Ausschalten des Wechselrichters 8 bewirkt. Der Wechselrichter 8 wird damit nur aktiv, wenn auch ein entsprechendes 230 V-Gerät bzw. eine 230 V-Armatur angetrieben werden soll. Bereits in der Initialisierungsphase der Armatur 2 ist eine Versorgungsspannung von 230 V notwendig.

Bei der Puffer-Batterie 5 kann es sich um eine Gel-Batterie handeln, wobei die Speichergröße der Batterie auf die Leistung der Armatur 2 abgestimmt ist.

Ferner ist ein Sende-/Empfangsgerät 10 vorgesehen, mit welchem Informationen an ein externes Kommumkationsgerät, im vorliegenden Fall einen Computer 11 sowie ein Mobiltelefon 12 gesendet bzw. von diesen empfangen werden. Bei dem Sende-/Empfangsgerät 10 selbst kann es sich auch um einen Computer handeln.

Insbesondere kann die Anlage auf diese Weise über SMS- oder GSM- bzw. GPRS-Netze von jedem Ort aus aktiviert, gesteuert und überwacht werden. Das externe Kommunikationsgerät kann sich z.B. in einer zuständigen Leitwarte, einem autorisierten Reparaturservice oder dergleichen befinden.

Weiterhin ist ein Sensor 13 vorgesehen, der bei dem Eintritt eines Auslösekriteriums zur Betätigung der Armatur 2 reagiert. Bei dem Sensor kann es sich z.B, um einen Sensor handeln, der z.B. den Füllstand eines Beckens oder bestimmte Stoffe (z.B. Mineralöle) erkennt. Bei Erkennen des Auslösektiteriums wird sodann der Armaturschieber verschlossen, um zu verhindern, dass z.B. noch mehr Wasser oder ölverseuchtes Wasser weiter in die Kanalisation eindringt. Der Sensor 13 kann auch z.B. auf eine bestimmte Wasserstandshöhe reagieren.

Dem Sende-/Empfangsgerät 10 sowie dem Sensor 13 ist eine Sensorauswertung 14 nachgeschaltet. Die Sensorauswertung 14 wertet das vom Sende-/Empfangsgerät 10 oder vom Sensor 13 ankommende Signal aus und gibt dieses an die Positionsauswertung 15 weiter, welche sodann ihrerseits das Signal an die Steuereinheit 7 sendet.

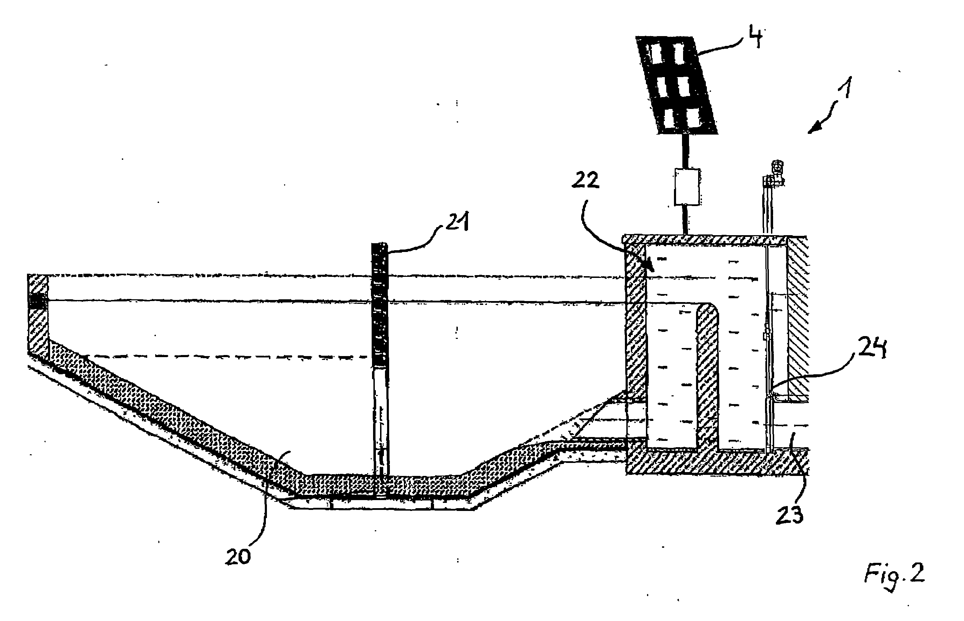

In Fig. 2 ist ein möglicher Einsatzbereich einer Vorrichtung gemäß Fig. 1 (lediglich ohne Windgenerator) dargestellt, wobei die Vorrichtung 1 in ein sogenanntes Regenruckhaltebecken integriert ist. Derartige Regenrückhaltebecken befinden sich z.B. seitlich von Autobahnen, wobei Regenwasser durch ein Drainagesystem in das Absetzbecken 20 einfließt. Bezugsziffer 21 bezeichnet eine Mauer mit einer unterseitigen Öffnung, durch welche das Wasser hindurch treten kann. Das Wasser fließt sodann in ein Überlaufwerk 22, von wo aus es in einen Kanal 23 wieder austreten kann. An der Grenze von Überlaufwerk 22 zu Kanal 23 befindet sich eine Schieberarmatur 24, durch deren Schließen ein weiteres Austreten von Wasser in den Kanal 23 verhindert werden kann. Die Schieberarmatur 24 wird mittels der oben beschriebenen Vorrichtung angetrieben. Fließt in einem Havariefall z.B. Mineralöl in das Absetzbecken 30, so erkennt ein im Überlaufwerk 22 angeordneter Sensor das Öl und gibt diese Information an die Sensorauswertung 14 weiter. Die nachgeordnete Steuereinheit 7 schließt mit der Schieberarmatur 24 den Kanal 23. Zusätzliches Personal ist dabei nicht notwendig. Es besteht auch die Möglichkeit, dass in einem Havariefall die zuständige Leitwarte Kenntnis von einem zu erwartenden Vorfall erlangt und dann selbst das in der Vorrichtung 1 vorgesehene Sende-/Empfangsgerät 10 informiert, so dass dieses gleich das Schließen der Schieberarmatur 24 startet, Die gleiche Funktion kann für routinemäßige Bewegungsabläufe verwendet werden.

### BEZUGSZEICHENLISTE

- 1): Vorrichtung
- 2): Armatur
- 3): Windgenerator
- 4): Fotovoltaikanlage
- 5): Puffer-Batterie
- 6): Laderegelung
- 7): Steuereinheit
- 8): Wechselrichter
- 9): Zeitgeber
- 10): Sende-/Empfangsgerät
- 11): Computer
- 12): Mobiltelefon
- 13): Sensor
- 14): Sensorauswertung
- 15): Positionsauswertung
- 16): Motor
- 20): Absetzbecken
- 21): Mauer
- 22): Überlaufwerk
- 23): Kanal
- 24): Schieberarmatur

## Patentansprüche

1. Vorrichtung zum Betrieb mindestens eines mechanisch und/oder elektrisch betätigbaren Bauelements oder Baugruppe mit mindestens einer netzunabhängigen Energiequelle, mindestens einem Energiespeicher zum Speichern der Energie der Energiequelle sowie einer dem Bauelement oder der Baugruppe vorgeschalteten Steuereinheit (7),
**dadurch gekennzeichnet, dass**
dem Energiespeicher eine Vorrichtung zur Umwandlung von Gleichspannung in Wechselspannung nachgeschaltet ist, die der Steuereinheit (7) unmittelbar vorgeschaltet ist, um im Bedarfsfall die für die Betätigung des Bauelements oder der Baugruppe nötige Energiemenge zur Verfügung zu stellen.

2. Vorrichtung nach Anspruch 1,
**dadurch gekennzeichnet, dass**
als Energiequelle eine regenerative Energiequelle vorgesehen ist.

3. Vorrichtung nach einem der Ansprüche 1 oder 2,
**dadurch gekennzeichnet, dass**
als Vorrichtung zur Umwandlung von Gleichspannung in Wechselspannung ein Wechselrichter (8) vorgesehen ist.

4. Vorrichtung nach einem der vorhergehenden Ansprüche,
**dadurch gekennzeichnet, dass**
an der Vorrichtung zur Umwandlung von Gleichspannung in Wechselspannung ein Zeitgeber (9) vorgesehen ist.

5. Vorrichtung nach einem der vorhergehenden Ansprüche,
**dadurch gekennzeichnet, dass**
mittels des Wechselrichters (8) eine am Einsatzort verwendete Versorgungsspannung von z.B. 230 V erzeugbar ist.

6. Vorrichtung nach einem der vorhergehenden Ansprüche,
**dadurch gekennzeichnet, dass**
als Energiespeicher eine Puffer-Batterie (5) vorgesehen ist.

7. Vorrichtung nach einem der vorhergehenden Ansprüche,
**dadurch gekennzeichnet, dass**
als mechanisch und/oder elektrisch betätigbares Bauelement oder Baugruppe eine Armatur für die Gas-, Öl- oder Wasserver- und/oder -entsorgung vorgesehen ist.

8. Vorrichtung nach einem der vorhergehenden Ansprüche,
**dadurch gekennzeichnet, dass**
ein Sende-/Empfangsgerät (10) vorgesehen ist, um Informationen an ein externes Kommunikationsgerät zu senden bzw. von diesem zu empfangen.

9. Vorrichtung nach einem der vorhergehenden Ansprüche,
**dadurch gekennzeichnet, dass**
mindestens ein Sensor (13) vorgesehen ist, der bei dem Eintritt eines Auslösekriteriums zur Betätigung eines Bauelements oder einer Baugruppe reagiert.

10. Vorrichtung nach einem der vorhergehenden Ansprüche,
**dadurch gekennzeichnet, dass**
dem Sende-/Empfangsgerät (10) und/oder dem Sensor (13) eine Sensor-Auswertung (14) nachgeschaltet ist.

11. Vorrichtung nach einem der vorhergehenden Ansprüche,
**dadurch gekennzeichnet, dass**
der Sensor-Auswertung eine Positionsauswertung (15) nachgeschaltet ist.
